# FASCICULE DE BREVET EUROPEEN

(11) **EP 2 882 686 B1**
(45) Date de publication et mention de la délivrance du brevet: **19.09.2018**
(21) Numéro de dépôt: 13762413.6
(22) Date de dépôt: 09.08.2013
(51) Int. Cl.: C01C 1/00, F01N 3/20, F01N 3/24

(54) **STRUCTURE DE STOCKAGE D'AMMONIAC ET SYSTÈMES ET PROCÉDÉ ASSOCIÉS**
STRUKTUR ZUR LAGERUNG VON AMMONIAK UND ENTSPRECHENDE SYSTEME UND VERFAHREN
AMMONIA STORAGE STRUCTURE AND ASSOCIATED SYSTEMS AND METHOD

(30) Priorité: 09.08.2012 EP 12305993
(43) Date de publication de la demande: 17.06.2015
(73) Titulaire: Aaqius & Aaqius S.A., 1207 Genève (CH)
(72) Inventeur: DEMENTHON, Jean-Baptiste, F-75011 Paris (FR); LEVY, Michael, Francis, F-75015 Paris (FR)
(74) Mandataire: Regimbeau
(86) Numéro de dépôt international: PCT/EP2013/066768
(87) Numéro de publication internationale: WO 2014/023840

(56) Documents cités:
- EP-A1- 1 977 817
- EP-A1- 2 386 523
- EP-A1- 2 428 490
- WO-A1-2010/025948
- WO-A1-2011/038916
- DE-A1-102008 002 338
- HAN AND K H LEE J H: "Gas permeability of expanded graphite-metallic salt composite", APPLIED THERMAL ENGINEERING, PERGAMON, OXFORD, GB, vol. 21, no. 4, 1 mars 2001 (2001-03-01), pages 453-463, XP002620755, ISSN: 1359-4311

## Description

### Domaine de l'invention

L'invention concerne d'une façon générale le stockage de l'ammoniac dans des applications de réduction des oxydes d'azote NOx par réduction catalytique sélective (SCR), notamment pour la réduction des émissions de polluants par les moteurs à combustion interne, en particulier les moteurs diesel.

### Etat de l'art

Les émissions de polluants liées au transport sont depuis près de trente ans un moteur de progrès de premier plan de l'industrie. L'augmentation progressive de la sévérité des limites en émission pour les quatre polluants réglementés (CO, HC, NOₓ, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Une diminution de la tolérance vis-à-vis des seuils d'émission Européens est attendue en 2014 dans le cadre des étapes pour l'entrée en vigueur de la norme Euro6. De telles mesures visent à réduire la pollution locale. Disposer de technologies de dépollution à forte efficacité dans toutes les conditions de roulage est ainsi un enjeu majeur pour l'industrie du transport. Dans ce contexte, la réduction des oxydes d'azote (NOₓ) en mélange pauvre, c'est-à-dire en mélange comprenant de l'oxygène en excès, représente un enjeu important associé à une problématique complexe.

Par ailleurs, la consommation de carburant, en lien direct avec les émissions de CO₂, a été propulsée en quelques années au rang de préoccupation majeure de l'automobile. Ainsi, une réglementation a été mise en place au niveau Européen à partir de 2012 sur les émissions de CO₂ des véhicules particuliers. Il est d'ores et déjà acquis que cette limite sera régulièrement abaissée au cours des décennies à venir. La réduction des émissions CO₂ s'est donc imposée comme le nouveau moteur de croissance pour toute l'industrie des transports.

Cette double problématique réduction de la pollution locale (NOₓ) et réduction de la consommation carburant (CO₂) est particulièrement difficile pour le moteur Diesel dont la combustion en mélange pauvre s'accompagne d'émissions en NOₓ difficile à traiter.

Dans ce contexte, la technologie de post-traitement SCR (« selective catalytic réduction », réduction catalytique sélective en terminologie anglo-saxonne) est utilisée aussi bien pour les véhicules particuliers que pour les véhicules affectés au transport de marchandises. Il est alors possible de positionner le moteur sur son fonctionnement optimal en rendement, les fortes émissions de NOₓ étant ensuite traitées dans l'échappement par le système SCR permettant une réduction NOx avec une forte efficacité.

Pour permettre la mise en place d'une telle technologie SCR il est nécessaire d'embarquer à bord du véhicule un agent réducteur nécessaire pour la réduction des oxydes d'azote. Le système actuellement retenu par les poids lourds utilise l'urée en solution aqueuse comme agent réducteur. Injecté à l'échappement, l'urée se décompose par effet de la température des gaz d'échappement en ammoniac (NH₃) et permet la réduction des NOₓ sur un catalyseur spécifique. Une solution aqueuse d'urée retenue et standardisée pour le fonctionnement des systèmes actuellement en série de SCR est référencée en AUS32 (le nom commercial en Europe étant Adblue®)

Ce procédé très efficace souffre pourtant d'un certain nombre d'inconvénients. Il présente une efficacité à froid limitée, alors qu'une telle situation se présente dans plusieurs cas, notamment celui des bus en ville. Le réservoir d'urée présente une masse et un volume important, typiquement 15 à 30L pour un véhicule particulier, 40 à 80L pour un poids-lourds. Un tel encombrement entraîne une complexité d'intégration dans le véhicule d'autant plus importante que le véhicule est petit. Il en résulte un coût élevé de la dépollution, ainsi qu'un excédent de masse qui se fait au détriment de la consommation en carburant du véhicule et donc des émissions de CO2.

Diverses méthodes alternatives de stockage ont été envisagées. L'option de stocker l'ammoniac sous forme gazeuse sous pression présente de nombreux inconvénients en termes de compacité et de sécurité de fonctionnement.

Une méthode privilégiée consiste en une absorption du gaz à l'intérieur d'un matériau, par exemple un sel, disposé dans une enceinte de stockage. Le stockage d'ammoniac est alors réalisé au sein du sel par la formation de complexe chimique du type ammoniacate. Les avantages de ce type de stockage par rapport à l'urée en solution aqueuse sont nombreux. Le stockage au sein d'un sel permet une réduction de masse et de volume du réservoir de stockage significative. Il permet également un bénéfice en termes de bilan CO₂ en raison de la diminution de la masse de réducteur à embarquer pour une autonomie en ammoniac donnée. On économise en effet la quantité d'eau additionnelle prévue pour diluer l'urée dans la configuration classique de la SCR, dite liquide. Par ailleurs, ce type de stockage permet de mettre en oeuvre une absorption de NOₓ à froid avec une efficacité plus élevée. Ce type de stockage assure de plus une réduction des coûts de fabrication car le système d'alimentation et injection de l'ammoniac peut être simplifié.

Pour limiter l'encombrement de l'enceinte de stockage, les constructeurs automobiles privilégient un remplissage ou un remplacement de l'enceinte de stockage, par exemple lors de la maintenance moteur, au moment de la vidange, ou lors d'un remplissage réservoir carburant. La quantité d'ammoniac embarquée à bord d'un véhicule particulier sera de l'ordre de 6 kg pour un équivalent 16 L d'une solution d'urée de type AUS32, ce qui permet d'assurer l'autonomie du véhicule particulier entre deux intervalles de vidange du véhicule. Pour permettre l'alimentation du système en ammoniac, il est prévu un élément de chauffage, électrique ou via un fluide caloporteur par exemple, contrôlé de sorte à doser dans chaque condition d'utilisation l'ammoniac destiné au traitement des oxydes d'azote.

Une fois l'enceinte de stockage, par exemple une cartouche, vide, elle est remplacée par une pleine, par exemple lors d'une maintenance de véhicule, la vide étant renvoyée à une centrale de remplissage. Une cartouche pourra ainsi subir de dix à quinze cycles de vidage / remplissage.

Pour limiter la puissance électrique moyenne utilisée pour la gestion du déstockage d'ammoniac, on peut recourir à un additif complétant la matrice de sel, ledit additif présentant une conductivité thermique très supérieure au sel, ce qui permettra de faciliter le transfert de chaleur depuis l'organe de chauffage jusqu'au coeur du matériau de stockage. Cet additif pourra typiquement être du graphite naturel expansé.

La bonne formulation dudit additif possède par ailleurs d'autres vertus. Tout d'abord, sa présence peut permettre de faciliter la phase de remplissage en ammoniac lors de la maintenance (temps de remplissage raccourci). Enfin la présence de cet additif pourra apporter un bénéfice quant à la durabilité du système. Notamment au cours des cycles successifs de vidage remplissage de la cartouche.

En effet, au cours de la réaction d'absorption, la fixation de l'ammoniac gazeux par le sel solide constituant matériau de stockage s'accompagne d'une augmentation de volume, l'ammoniacate occupant alors un volume très supérieur au volume du sel pur. Le volume du sel après absorption peut être jusqu'à quatre à cinq fois plus important que le volume du sel sans ammoniac. L'augmentation de volume du sel est due non seulement à la dilatation du réseau cristallin du matériau mais aussi à son fractionnement laissant ainsi de l'espace libre entre les microcristaux de complexe ammoniacate. Les phases successives de dilatation, contraction de la matrice poreuse peuvent ainsi provoquer localement des phénomènes de frittage ce qui a un effet négatif sur l'homogénéité de la porosité et de manière générale sur la durabilité du matériau.

La réalisation d'un mélange optimal entre la phase stockante (sel) et l'additif est donc une des clés de réalisation du système. Une technique connue pour la réalisation d'un tel mélange, consiste à obtenir le lien entre phase stockante et additif via un bain de méthanol. Ce procédé extrapolé à l'échelle d'une production série automobile se révèle complexe et onéreuse en investissement, du fait de l'intervention d'un produit intermédiaire, en l'occurrence le méthanol, et des nombreuses phases supplémentaires de fabrication, telles que la préparation du bain de méthanol, la création des conditions thermodynamiques du mélange entre les deux produits dans la proportion recherchée, le séchage de l'ensemble et le conditionnement de la matrice ainsi obtenue.

DE10200802338A1 décrit un dispositif pour libérer de l'ammoniac. WO2011/038916A1 décrit des structures connectées de conducteur de chaleur dans des systèmes de stockage d'ammoniac solide. EP2386523A1 décrit un dispositif de fourniture d'ammoniac. EP1977817A1 décrit un système pour stocker de l'ammoniac et pour libérer de l'ammoniac d'un matériel de stockage.

### Résumé de l'invention

Un but de l'invention est de fournir une structure et un mode de réalisation d'une matrice destinée au stockage de l'ammoniac, comprenant un matériau destiné au stockage proprement dit par absorption, qui permette un fonctionnement amélioré et une plus grande efficacité.

A cet effet, il est prévu une structure de stockage d'ammoniac, caractérisée en ce qu'elle comprend une alternance :
d'au moins une couche de stockage d'ammoniac, et
d'au moins une couche d'un matériau thermiquement conducteur de conductivité thermique supérieure à celle de la couche de stockage, la ou chaque couche de matériau thermiquement conducteur étant destinée à augmenter les transferts thermiques au sein de la structure.

L'invention est avantageusement complétée par les caractéristiques suivantes, prises seules ou selon l'une quelconque de leurs combinaisons techniquement possibles :
la ou chaque couche de stockage de l'ammoniac comprend un sel pulvérulent,
la ou chaque couche de matériau thermiquement conducteur est constituée d'une poudre préalablement compressée,
l'au moins une couche de stockage est une galette rigide compressée ou non compressée,
le nombre de couches de matériau thermiquement conducteur, chaque couche intermédiaire est mécaniquement indépendante de la couche adjacente ou des autres couches,
chaque couche assure une séparation mutuelle totale entre les deux couches qui l'avoisinent.

L'invention concerne également un système de stockage et de déstockage d'ammoniac d'un véhicule comprenant une enceinte de stockage, caractérisé en ce que l'enceinte de stockage comprend une structure de stockage telle que décrite précédemment.

L'invention est avantageusement complétée par les caractéristiques suivantes, prises seules ou selon l'une quelconque de leurs combinaisons techniquement possibles :
la ou chaque couche de matériau thermiquement conducteur est dimensionnée par rapport à l'enceinte pour présenter un jeu entre ladite couche et la paroi de l'enceinte lorsque la structure n'est pas saturée en ammoniac, de sorte qu'une augmentation du volume de l'au moins une couche de stockage par stockage d'ammoniac est compensée dans une phase initiale de remplissage par une modification de la forme de la couche de matériau thermiquement conducteur pour occuper un espace libre résultant du jeu,
le jeu est situé entre une paroi latérale de l'enceinte et une paroi latérale de la couche de matériau thermiquement conducteur,
le jeu est compris entre 2% et 30% du diamètre transversal de la couche de matériau thermiquement conducteur,
la structure de stockage est réalisée de sorte que la ou chaque couche de matériau thermiquement conducteur est apte à se comprimer dans une phase finale de remplissage,
chaque couche s'étend, dans une condition de remplissage donnée, généralement sur toute l'étendue de la section transversale de l'enceinte,
la structure présente un évidement le long de l'axe de symétrie de révolution pour permettre le stockage et/ou le déstockage d'ammoniac au niveau de chaque couche de stockage,
un dispositif de chauffage de la structure de stockage pour le déstockage de l'ammoniac stocké dans la structure, le dispositif de chauffage comprenant plusieurs modules chauffants, chaque module chauffant étant adapté pour chauffer une couche de stockage indépendamment d'autres couches de stockage,
la structure comprend des canaux d'acheminement d'ammoniac de l'extérieur de l'enceinte vers l'au moins une couches de stockage et dans le sens inverse,
un système de stockage d'ammoniac tel que décrit précédemment et un module d'injection de l'ammoniac dans les gaz d'échappement.

L'invention concerne également un procédé d'obtention d'une structure de stockage d'ammoniac telle que décrite précédemment, le procédé comprenant des étapes consistant à :
déposer une couche de stockage comprenant un sel non compressé ou préalablement compressé,
déposer une couche d'un matériau thermiquement conducteur présentant une conductivité thermique plus élevée que celle de la couche de stockage, constitué d'une poudre préalablement compressée,
ces deux étapes étant répétées pour former une structure comprenant une alternance de couches de stockage et de couche(s) de matériau thermiquement conducteur intercalaire(s).

L'invention est avantageusement complétée par les caractéristiques suivantes, prises seules ou selon l'une quelconque de leurs combinaisons techniquement possibles :
les étapes de dépôt sont réalisées dans une enceinte de stockage,
l'introduction du sel pulvérulent dans l'enceinte pour former un couche et une mise en forme de cette couche par un plongeur,
la couche de stockage et la couche d'un matériau thermiquement conducteur sont pré-assemblées, les deux couches étant ensuite déposées simultanément dans l'enceinte,
le pré-assemblage est réalisé par collage et/ou compression des couches l'une contre l'autre.

### Brève description des figures

D'autres caractéristiques, buts et avantages de l'invention apparaitront lors de la description ci-après d'un mode de réalisation. Aux dessins annexés :
- la figure 1 représente un moteur thermique équipé d'un système de post-traitement SCR par injection d'ammoniac selon un mode de réalisation de l'invention,
- La figure 2a représente la structure cristalline d'une couche de sel de MgCl2,
- la figure 2b représente une molécule d'ammoniac,
- la figure 2c représente la structure cristalline du MgCl₂(NH₃)₂,
- la figure 2d la structure cristalline du MgCl₂(NH₃)₆,
- les figures 3a à 3d représentent l'ajout d'additif en poudre à un sel selon l'art antérieur,
- les figures 4a à 4h représentent un procédé de réalisation de la structure de stockage selon un mode de réalisation de l'invention,
- la figure 5 représente une partie d'une structure de stockage, présentent un jeu, le tableau 1 représente le ratio d'expansion théorique de complexes ammoniacates.

### Description détaillée de l'invention

### 1) Propriétés connues de la chemisorption d'ammoniac dans les sels

### a) Réaction

Dans une structure de stockage, un sel pulvérulent est choisi parmi les chlorures d'alcalino-terreux. En particulier, le sel pulvérulent est choisi parmi les composés suivants : SrCl₂, MgCl₂, BaCl₂, CaCl₂, NaCl₂. Le stockage d'ammoniac repose par ailleurs sur une réaction réversible solide - gaz du type :

< Solide A > + (Gaz) ⇄ < Solide B >

L'ammoniac forme avec les chlorures d'alcalino-terreux des complexes de coordination aussi appelés ammoniacates. Ce phénomène est connu de l'homme du métier.

Par exemple, les réactions de l'ammoniac avec le chlorure de strontium sont :

SrCl₂ (s) + NH₃ (g) ⇄ Sr(NH₃)Cl₂ (s)

Sr(NH₃)Cl₂ (s) + 7 NH₃ (g) ⇄ SrCNH₃)₈Cl₂ (s)

De même l'unique réaction de l'ammoniac avec le chlorure de barium est :

BaCl₂ (s) + 8 NH₃ (g) ⇄ BaCNH₃)₈Cl₂ (s)

L'absorption chimique du ligand ammoniac par l'absorbant SrCl₂ et BaCl2 entraîne, entre le solide et le gaz, un transfert d'électrons qui se traduit par des liaisons chimiques entre NH₃ et la couche externe des atomes de SrCl₂ et BaCl₂. La pénétration du gaz dans la structure du solide se faisant dans la totalité de sa masse par un processus de diffusion. Cette réaction est parfaitement réversible, l'absorption étant exothermique et la désorption endothermique.

### b) Dilatation

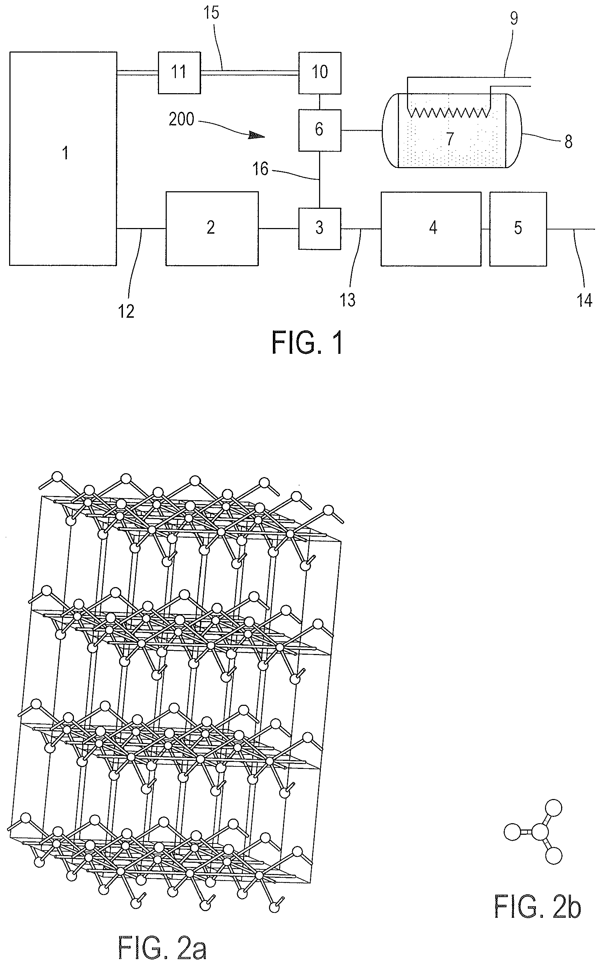

En référence aux figures 2a à 2d, la dilatation résultant du phénomène d'absorption dans le cas du sel chlorure de magnésium est décrit. La figure 2a représente la structure cristalline d'une couche de sel de MgCl₂. La figure 2b représente une molécule d'ammoniac.

Les réactions de l'ammoniac avec le chlorure de magnésium sont de la forme :

MgCl₂ (s) + nNH₃ (g) ⇄ MgCl₂(NH₃)*ₙ* (s)

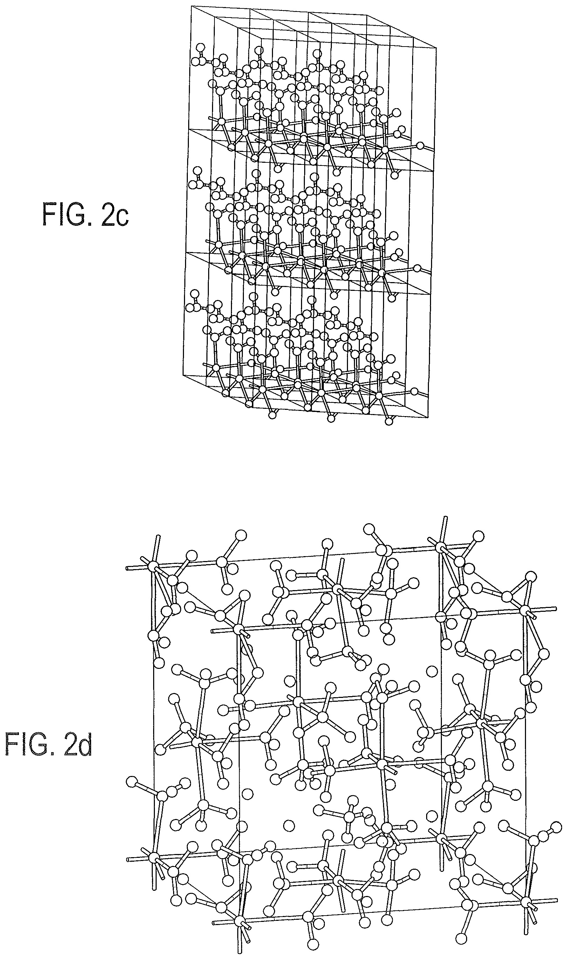

Où n peut valoir 2 ou 6. Ainsi la figure 2c représente la structure cristalline du MgCl₂(NH₃)₂ et la figure 2d la structure crystalline du MgCl₂(NH₃)₆.

En référence à la table 1, il est indiqué le facteur de dilatation théorique entre différents sels pur et leurs complexes purs associés. Cette valeur correspond uniquement à la dilatation du réseau cristallin, n'intègre par la dilatation du au fractionnement entre les microcristaux. Les valeurs d'enthalpie d'absorption à l'équilibre à pression de vapeur basse.

**Tableau 1**

| Formule moléculaire | Masse moléculaire (g/mol) | Densité (kg/L) | Facteur de dilatation | Enthalpie d'absorption (kJ/mol) | Entropie d'absorption (J/mol.K) |
|---|---|---|---|---|---|
| (NH₂)₂CO⁺H2O | N/A | 1,086 | | 0,184 | 0,2 |
| MgCl₂ | 95,21 | 2,32 | | | |
| Mg(NH₃)₆Cl₂ | 197,39 | 1,16 | 2 | 55,7 | 230 |
| SrCl₂ | 158,53 | 3,05 | | | |
| Sr(NH₃)₈Cl₂ | 294,77 | 1,3 | 2,35 | 38,7 | 230 |
| BaCl₂ | 208,23 | 3,85 | | | |
| Ba(NH₃)₈Cl₂ | 344,37 | 1,7 | 2,26 | 41,4 | 230 |
| NH₃ | 17,03 | 0,61 | | | |

### c) Conditions sur la structure de stockage

Une structure de stockage d'ammoniac doit pouvoir assurer plusieurs cycles de remplissage/vidage au cours de la vie du véhicule auquel elle est associée. Ces cycles de vidage/remplissage donnent lieu à des changements de phase de l'ammoniac. Le vidage sera provoqué par élévation de température de la structure, le remplissage quant à lui est assuré après connexion d'une enceinte 8 à un circuit d'alimentation 200 d'ammoniac sous pression et via un dispositif de refroidissement de l'ensemble, destiné à évacuer les calories dégagées lors du changement de phase de l'ammoniac.

Dans le cas d'une absorption du gaz dans un sel pulvérulent, le gaz diffuse au travers du milieu poreux de sel de la structure de stockage, depuis le grain de sel vers la sortie de l'enceinte, par exemple une cartouche, permettant la mise à disposition de l'ammoniac à injecter à l'échappement.

Lors de la phase de conditionnement et de reconditionnement de l'enceinte, l'ammoniac est réintroduit dans le système, diffuse au sein du milieu poreux créé par le sel pulvérulent et s'absorbe au sein des grains de sel. Le cycle de ces transformations dans le temps, ou respiration du matériau, doit pouvoir se faire sans détérioration de la capacité de stockage et avec des durées raisonnables. Des gradients de compression hétérogènes dans le sel et des mécanismes de frittage peuvent en effet détériorer la structure de stockage.

Lors d'une phase de désorption, il convient de pouvoir disposer de gaz sous pression disponible dans un délai compatible avec la réglementation, laquelle prévoit de mesurer l'efficacité du système SCR à diverses températures de fonctionnement comprises entre -15°C et 25°C.

Lors d'une phase d'absorption correspondant à un conditionnement ou à un reconditionnement de l'enceinte 8, il convient également de minimiser la durée de remplissage de la cartouche afin de maitriser le coût de l'opération, qu'il s'agisse de la fabrication initiale de la cartouche ou de sa recharge lors de la vie du véhicule.

### d) Additifs

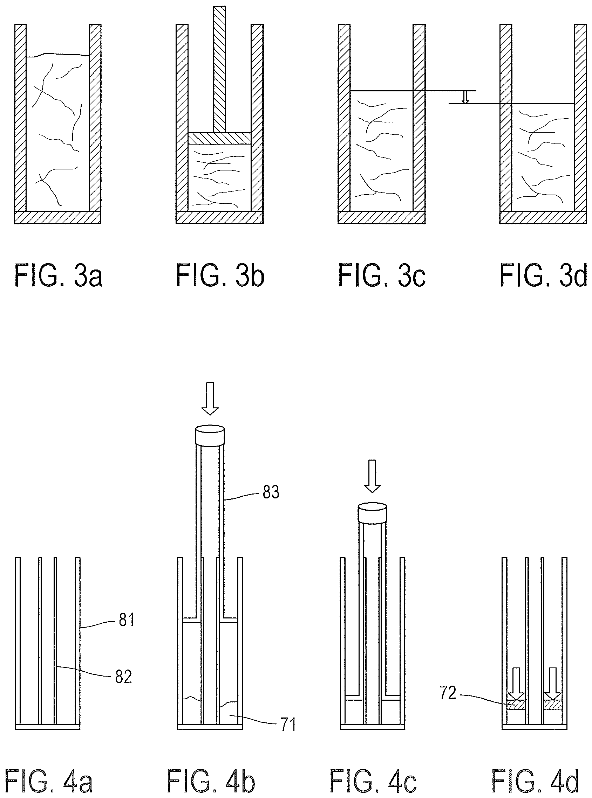

En référence aux figures 3a à 3d, il est décrit l'ajout d'additif en poudre à un sel selon l'art antérieur. Pour améliorer la conductivité thermique, ce qui conduit à une diminution de la puissance électrique nécessaire à la gestion de l'ensemble et à un raccourcissement du temps nécessaire à la recharge du système, pour maintenir une bonne durabilité de ladite matrice au cours de ses dilatations et compressions successives, et rendre la structure de stockage plus robuste, c'est-à-dire plus apte à se remplir, l'ajout de divers additifs a été envisagé dans l'état de l'art.

L'additif peut comprendre du graphite naturel expansé qui peut ainsi être ajouté au sel avant d'être compacté.

L'additif peut comprendre une poudre de métal, par exemple une poudre d'aluminium.

Ensuite lors de la désorption de l'ammoniac, le réseau créé par le graphite naturel expansé recompressé forme une structure robuste qui maintient les particules de sels déchargées en ammoniac. En pratique, le matériau ne se dilate donc pas d'un même facteur que ceux indiqués dans la table 1. Des trous se forment au coeur du matériau compacté.

En particulier, le sel peut être préalablement intégré intimement avec l'additif, introduit dans l'enceinte, puis compressé avant d'être chargé en ammoniac.

Une technique connue pour la réalisation d'un tel mélange, consiste à obtenir le lien entre phase de stockage et additif via un bain de méthanol. Ce procédé extrapolé à l'échelle d'une production série automobile se révèle complexe et onéreux en investissements, du fait de l'intervention d'un produit intermédiaire, en l'occurrence le méthanol, et des nombreuses phases supplémentaires de fabrication, telles que la préparation du bain de méthanol, la création des conditions thermodynamiques du mélange entre les deux produits dans la proportion recherchée, le séchage de l'ensemble et le conditionnement de la matrice ainsi obtenue.

Une autre approche, permet d'obtenir un mélange entre les deux phases de la matrice composite que sont le sel et l'additif, sans recours à un bain intermédiaire de méthanol. Le mélange est ainsi réalisé « à sec ».

La figure 3a représente un mélange de sel et d'additif en poudre dans une enceinte. La figure 3b représente une étape de compactage du mélange de sel et d'additif en poudre expansé dans l'enceinte. La figure 3c représente le sel mélangé à l'additif saturé en ammoniac. La figure 3d représente le sel mélangé à l'additif après décharge de l'ammoniac. Le mélange est cependant complexe à réaliser car les deux composants ne partagent pas la même densité. L'utilisation d'un matériau non expansé permettrait de palier à cet inconvénient, mais provoquerait une baisse de la qualité de la matrice de stockage, notamment en abaissant sa conductivité thermique.

### 2) Structure illustrant un mode de réalisation de l'invention

La structure de stockage décrite ci-dessous a pour objet d'éviter les difficultés liées à un stockage dans une structure constituée uniquement de sel ou de sel mélangé à un additif.

La structure de stockage d'ammoniac comprend au moins une couche comprenant un sel pulvérulent adapté pour stocker et déstocker de l'ammoniac.

La structure de stockage d'ammoniac comprend en outre au moins une couche en un matériau thermiquement conducteur afin d'augmenter les transferts thermiques au sein de la structure.

Il est ainsi possible d'améliorer le transfert de la chaleur au sein de la structure de stockage.

La structure de stockage forme ainsi une structure de stockage d'ammoniac comprenant une alternance d'au moins une couche de stockage d'ammoniac et d'au moins une couche d'un matériau thermiquement conducteur. Par alternance, on entend une couche de stockage d'ammoniac et une couche d'un matériau thermiquement conducteur. Par alternance on entend donc que la structure comprend au moins ces deux couches, ou trois couches superposées, ou plus.

Dans le cas de trois couches, l'alternance peut comprendre une couche de stockage disposée entre deux couches de matériau thermiquement conducteur, ou une couche de matériau thermiquement conducteur entre deux couches de stockage.

Dans une structure de stockage d'ammoniac comprenant une pluralité de couches de stockage et une pluralité de couches de matériau thermiquement conducteur, les couches de matériau thermiquement conducteur peuvent être intercalées entre les couches de stockage, ou les couches de stockage peuvent être intercalées entre les couches de matériau thermiquement conducteur.

Ainsi, la structure de stockage d'ammoniac peut par exemple comprendre au moins deux couches comprenant un sel pulvérulent adapté pour stocker et déstocker de l'ammoniac. Les au moins deux couches de sel pulvérulent sont séparées l'une de l'autre par au moins une couche en un matériau thermiquement conducteur afin d'augmenter les transferts thermiques au sein de la structure. Le matériau thermiquement conducteur est un matériau présentant une conductivité thermique plus élevée que celle du sel auquel il est associé. Sa présence en couche intercalaire permet d'augmenter les transferts thermiques au sein de la structure de stockage. Une telle structure correspond également à une alternance. Par alternance on entend également une structure au sein de laquelle se trouvent en alternance un plus grand nombre de couches de stockage et de couches en un matériau thermiquement conducteur.

Le sel pulvérulent est choisi parmi les chlorures d'alcalino-terreux. En particulier, le sel peut être constitué des composés suivants : SrCl₂, MgCl₂, BaCl₂, CaCl₂, NaCl₂.

Les couches de sel comprennent préférentiellement des grains de sel dont la granulométrie est comprise entre 1 et 1000 µm. Préférentiellement, la masse de matériau thermiquement conducteur constitue entre 1% et 30% de la masse de sel.

La ou chaque couche de stockage peut être réalisée en un sel pulvérulent compressé, par exemple préalablement compressé ou compressé lors de l'obtention de la structure de stockage. Alternativement, la couche de stockage peut être réalisée en un sel pulvérulent non compressé.

La ou chaque couche de stockage peut être un élément rigide. Par élément rigide on entend élément qu'on ne peut essentiellement pas déformer. Alternativement, la ou chaque couche de stockage peut ne pas être un élément rigide, par exemple une poudre d'un sel non compressé ou un élément plus aisément déformable.

La hauteur de l'ensemble des couches en un matériau de stockage est typiquement comprise entre 25% et 75%, plus préférentiellement par exemple entre 50% et 75%, de la hauteur de l'ensemble des couches en un matériau thermiquement conducteur, en fonction de la nature du matériau de stockage et du matériau thermiquement conducteur.

En particulier, la hauteur de chaque couche en un matériau de stockage est typiquement comprise entre 25% et 75%, plus préférentiellement par exemple entre 50% et 75%, de la hauteur de chaque couche en un matériau thermiquement conducteur.

De tels intervalles sont particulièrement adaptés au cas où le matériau de stockage comprend un sel d'alcalino-terreux et où le matériau thermiquement conducteur comprend du graphite naturel expansé, en particulier dans le cas où le sel d'alcalino-terreux est du chlorure de strontium ou du chlorure de baryum.

Le matériau thermiquement conducteur est par exemple constitué d'une poudre préalablement compressée pour former la ou les couches en matériau thermiquement conducteur. Alternativement, les couches en matériau thermiquement conducteur sont par exemple constituées d'une poudre non compressée.

Les couches en matériau thermiquement conducteur peuvent former des couches intercalaires entre lesquels de la poudre de sel non compressée est intégrée. Alternativement les couches de sel peuvent être formées de galettes rigides compressées ou non compressées.

Les couches de sels peuvent en outre comprendre un mélange de sel pulvérulent et d'un additif. L'additif peut être le matériau thermiquement conducteur. Dans ce mode réalisation, l'augmentation de la conductivité thermique de l'ensemble est réalisée en partie grâce aux couches intercalaires et en partie via la présence d'additif au sein de la couche destinée au stockage.

Le nombre de couches intercalaires de matériau thermiquement conducteur est préférentiellement compris entre 1 et 30.

Le matériau thermiquement conducteur peut par exemple être du graphite naturel expansé compressé en couches intercalaires. Le matériau thermiquement conducteur peut comprendre une poudre de métal, par exemple une poudre d'aluminium. Le matériau thermiquement conducteur peut être constitué de métal sous forme solide.

La structure de stockage est ou est destinée à être disposée à l'intérieur d'une enceinte.

En cours de fonctionnement d'un système comprenant cette structure de stockage dans une enceinte, de l'ammoniac gazeux sous pression dans l'enceinte.

Lorsque la structure de stockage n'est pas saturée, les grains de sel de l'au moins une couche de stockage absorbent l'ammoniac. Il est ainsi possible de remplir au moins partiellement l'au moins une couche de stockage en gaz avec cet ammoniac.

Par chauffage de la ou chaque couche de stockage, on peut ensuite obtenir la libération de l'ammoniac absorbé pour l'extraire de l'enceinte.

Les couches en un matériau de stockage et les couches en un matériau thermiquement conducteur peuvent avoir des formes variées, en particulier des sections de formes variées.

Les couches ont par exemple sensiblement la même forme que l'enceinte dans laquelle elles doivent être placées ou sont placées.

Les couches peuvent typiquement présenter une forme sensiblement cylindrique de section ronde, ou ovale, ou arrondie ou encore rectangulaire ou parallélépipédique.

### 3) Exemple illustrant un mode de réalisation de système de post-traitement SCR

Sur la figure 1, on a représenté schématiquement un moteur thermique équipé d'un système de post-traitement SCR par injection d'ammoniac. Le moteur thermique peut être un moteur à combustion interne, par exemple un moteur diesel, ou un moteur essence à mélange pauvre, tel qu'un moteur à injection directe à mélange stratifié.

Un moteur 1 est piloté par un calculateur électronique 11. En sortie du moteur, des gaz d'échappement 12 sont dirigés vers un système de dépollution 2. Le système de dépollution 2 peut comprendre un catalyseur d'oxydation ou un catalyseur à trois voies. Le système de dépollution peut en outre comprendre un filtre à particules.

De l'ammoniac 16 est injecté au niveau d'un circuit d'échappement du moteur et mélangé aux gaz d'échappement au moyen d'un module d'injection 3 disposé par exemple en aval de l'élément de dépollution 2 pour former un mélange ammoniac / gaz d'échappement 13. Le mélange ammoniac / gaz d'échappement 13 traverse ensuite un catalyseur SCR 4 qui permet la réduction des NOx par l'ammoniac. Des éléments complémentaires de post-traitement 5 peuvent être positionnés après le catalyseur SCR. Les éléments complémentaires 5 peuvent comprendre un filtre à particules ou un catalyseur d'oxydation. Les gaz d'échappement se présentent ainsi sous une forme de gaz d'échappement dépollués 14 en sortie des éléments complémentaires 5. Les gaz d'échappement dépollués sont ensuite dirigés vers une sortie d'échappement. Ainsi l'échappement comprend, disposés de l'amont, côté moteur 1, à l'aval, côté sortie, l'élément de dépollution 2, le module d'injection 3, le catalyseur SCR 4, et les éléments complémentaires 5.

Pour assurer une alimentation et un dosage de l'ammoniac 16 en entrée du module d'injection 3, le système comprend une enceinte de stockage d'ammoniac 8 contenant une structure de stockage 7 pouvant être piloté en température par un dispositif de chauffage 9 ou de réchauffage. Le dispositif de chauffage 9 comprend par exemple une résistance électrique ou un échangeur de chaleur alimenté par un fluide caloporteur tel que le liquide de refroidissement moteur.

Le dispositif de chauffage 9 permet par exemple de fournir de la chaleur directement à l'intérieur de l'enceinte 8. Alternativement, le dispositif de chauffage 9 permet par exemple de transmettre de la chaleur depuis l'extérieur l'enceinte 8 vers l'intérieur de l'enceinte 8.

En particulier, le dispositif de chauffage 9 permet de fournir de la chaleur à la structure de stockage 7.

La structure de stockage 7 comprend au moins deux couches de sel pulvérulent, les au moins deux couches de sel pulvérulent étant séparées l'une de l'autre par au moins une couche en un matériau thermiquement conducteur.

Les couches de la structure de stockage 7 peuvent présenter une symétrie de révolution de même axe. La structure 7 peut alors présenter un évidement le long de l'axe de symétrie de révolution pour permettre le stockage et/ou le déstockage d'ammoniac au niveau de chaque couche de sel.

La structure 7 peut comprendre des canaux d'acheminement d'ammoniac de l'extérieur de l'enceinte 8 vers les couches de sel et/ou dans le sens inverse.

Le dispositif de chauffage 9 peut comprendre plusieurs modules chauffants (non représentés), chaque module chauffant étant adapté pour réchauffer une couche de sel indépendamment des autres couches de sel.

L'enceinte de stockage 8 est connectée à un dispositif 6 de contrôle en pression de l'enceinte et de dosage de l'ammoniac vers le module d'injection 3. Ce dispositif 6 peut être piloté par un contrôleur électronique dédié 10 relié au calculateur électronique 11 du moteur.

Le système comprend ainsi un circuit d'alimentation en ammoniac 200 comprenant, d'amont en aval dans le sens de circulation de l'ammoniac, l'enceinte de stockage 8, le dispositif 6, et le module d'injection 3 dans l'échappement.

Dans une configuration alternative non représentée, le dispositif 6 peut être directement piloté par le calculateur moteur 11.

### 4) Procédé de réalisation de la structure

### Premier exemple de mode de réalisation

En référence aux figures 4a à 4h, il est décrit un procédé de réalisation de la structure de stockage 7 décrite dans l'enceinte 8 selon un exemple de mode de réalisation.

A l'état initial, représenté figure 4a, l'enceinte 8 est vide.

L'enceinte 8 présente par exemple une symétrie de révolution. L'enceinte 8 peut alors comprendre une paroi extérieure 81 cylindrique et une paroi intérieure formant un tube 82 délimitant un évidement central s'étendant le long de l'axe de symétrie de l'enceinte 8.

En référence à la figure 4b, le procédé comprend une première étape de dépôt d'une première couche de sel pulvérulent non compressé, par exemple dans la zone annulaire située entre la paroi extérieure 81 de l'enceinte 8 et la paroi du tube 82.

En référence aux figures 4b et 4c, il est décrit une deuxième étape de mise en forme de la première couche de sel par un plongeur. Cette deuxième étape permet d'obtenir une première couche de sel homogène typiquement, d'épaisseur constante dont la forme de la surface est telle qu'un contact intime sera assurée avec la couche de matériau thermiquement conducteur formée ensuite.

La première couche de sel présente ainsi par exemple une symétrie de révolution de même axe que l'enceinte 8.

En référence à la figure 4d, il est décrit une troisième étape de dépôt d'une première couche en un matériau thermiquement conducteur 72 sur la première couche de sel 71. Le matériau thermiquement conducteur est par exemple en un bloc préformé de graphite naturel expansé.

La couche en matériau thermiquement conducteur 72 présente par exemple les mêmes propriétés de symétrie de révolution que l'enceinte 8.

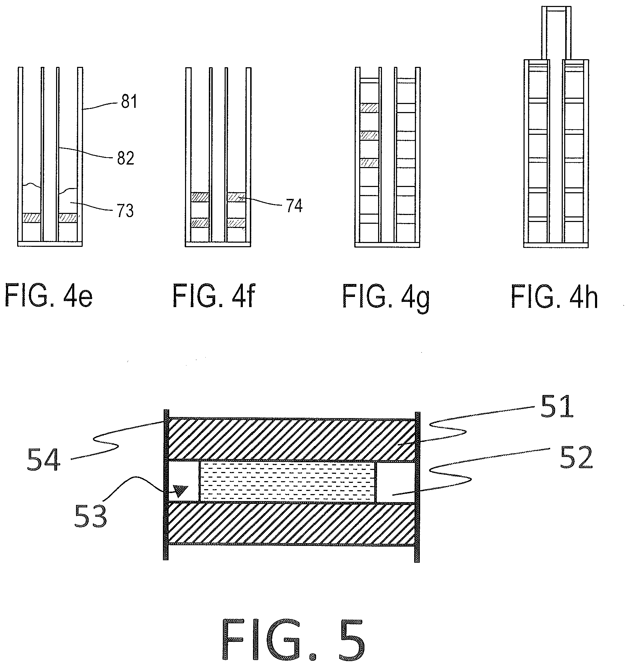

En référence à la figure 4e, il est décrit une quatrième étape de dépôt d'une deuxième couche de sel pulvérulent 73 non compressé sur la première couche en un matériau thermiquement conducteur 72.

La figure 4f représente l'enceinte 8 après le dépôt d'une deuxième couche en un matériau thermiquement conducteur 74.

Comme illustré à la figure 4g, les trois premières étapes du procédé peuvent être répétées jusqu'à trente fois pour obtenir une structure de stockage 7 stratifiée.

Il est à noter que l'on peut réaliser soit des couches de matériau de sel de stockage pur, soit des couches de sel en mélange, avec un ratio donné, avec un additif.

### Deuxième exemple de mode de réalisation

Par ailleurs, des galettes rigides de sel peuvent être préparées à l'avance par compression ou via l'utilisation d'un liant.

On procède ensuite à l'implantation des couches de sel et de graphite naturel expansé par empilements successifs de galettes rigides.

Il est ainsi possible d'obtenir des galettes rigides formant couche en un matériau de stockage.

Un procédé de réalisation de la structure de stockage 7 décrite dans l'enceinte 8 selon un autre exemple de mode de réalisation utilisant de telles galettes rigides est ici décrit.

A l'état initial, l'enceinte 8 est vide.

L'enceinte 8 présente par exemple une symétrie de révolution. L'enceinte 8 peut alors comprendre une paroi extérieure 81 cylindrique et une paroi intérieure formant un tube 82 délimitant un évidement central s'étendant le long de l'axe de symétrie de l'enceinte 8.

Le procédé comprend une première étape de dépôt d'une première couche en un matériau de stockage. La première couche est typiquement une galette rigide de sel pulvérulent compressé. La première couche en un matériau de stockage est typiquement déposée dans une zone annulaire située entre la paroi extérieure 81 de l'enceinte 8 et la paroi du tube 82.

Le procédé comprend une deuxième étape de dépôt d'une première couche en un matériau thermiquement conducteur sur la première couche en un matériau de stockage. Le matériau thermiquement conducteur est par exemple en une strate de graphite naturel expansible.

La couche en matériau thermiquement conducteur présente par exemple les mêmes propriétés de symétrie de révolution que l'enceinte 8.

Le procédé comprend une troisième étape de dépôt d'une deuxième couche en un matériau de stockage, similaire à celui de la première étape, sur la première couche en un matériau thermiquement conducteur.

Les deux premières étapes du procédé peuvent être répétées jusqu'à trente fois pour obtenir une structure de stockage 7 stratifiée.

### Troisième exemple de mode de réalisation

Selon une variante possible du procédé précédemment décrit utilisant des galettes rigides, certaines des couches peuvent être préassemblées hors de l'enceinte 8.

Un procédé de réalisation de la structure de stockage 7 décrite selon un troisième exemple de mode de réalisation, utilisant de telles galettes rigides est ici décrit.

Le procédé comprend une première étape de fourniture d'une première couche en un matériau de stockage et d'une première couche en un matériau thermiquement conducteur.

La première couche est typiquement une galette rigide de sel pulvérulent compressé. Le matériau thermiquement conducteur est par exemple en une strate de graphite naturel expansible.

Le procédé comprend une deuxième étape de pré-assemblage de la première couche en un matériau de stockage avec la première couche en un matériau thermiquement conducteur.

Par pré-assemblage, on entend un assemblage, typiquement partiel, réalisé en amont de l'agencement dans l'enceinte décrit précédemment, de sorte que les couches soit solidaires l'une de l'autre.

Les couches, ou des groupes donnés de couches, sont par exemple préassemblées entre elles au moyen d'une colle. Alternativement ou en complément, les couches sont par exemple assemblées entre elles par compression des couches l'une contre l'autre afin qu'elles adhèrent l'une à l'autre et/ou qu'elles s'interpénètrent au voisinage de leur interface.

Le procédé peut alors comprendre une ou plusieurs troisièmes étapes successives de pré-assemblage solidaire d'une ou de plusieurs couches en un matériau de stockage et/ou d'une ou de plusieurs couches en un matériau en un matériau thermiquement conducteur au pré-assemblage obtenu aux étapes précédentes pour former un pré-assemblage présentant une alternance telle que décrite précédemment.

Le procédé peut comprendre une quatrième étape de réalisation d'une structure de stockage dans une enceinte selon l'un des procédés décrits précédemment, comprenant en outre une étape de dépôt du pré-assemblage ainsi formé typiquement hors de l'enceinte, en tant que partie de la structure de stockage en formation.

Par formé hors de l'enceinte, on entend que les étapes de pré-assemblage ont été réalisées hors de l'enceinte.

Un tel pré-assemblage facilite le montage postérieur de la structure de stockage dans l'enceinte de stockage.

Par ailleurs un tel pré-assemblage permet une standardisation des pré-assemblages en tant qu'éléments de la matrice à monter pour former la structure dans l'enceinte. Il est ainsi possible d'obtenir des structures de stockage aux propriétés plus homogènes et donc plus prévisibles, ce qui permet un meilleur contrôle lors de leur utilisation postérieure. Notamment, on peut associer à un bloc de sel de stockage un bloc de conduction thermique assorti, optimisant ainsi les conditions de fonctionnement dans chacun des groupes pré-assemblés.

Il en résulte également une simplification de la logistique associée à l'acheminement des éléments constitutifs de la structure de stockage vers leur lieu de montage.

### Saturation en ammoniac

Préférentiellement, au cours des procédés de réalisations, typiquement des procédés de réalisation décrits précédemment, la ou chaque couche de stockage et la ou chaque couche de matériau thermiquement conducteur sont assemblées ou formées dans l'enceinte pour obtenir la structure de stockage en l'absence d'ammoniac.

Selon un mode de réalisation préféré, les couches de sel ne contiennent pas d'ammoniac durant les étapes précédemment décrites.

Le procédé peut donc comprendre une étape postérieure aux étapes précédentes, dans laquelle la structure de stockage ainsi formée est saturée au moins partiellement en ammoniac.

Préférentiellement, la ou chaque couche de stockage et la ou chaque couche de matériau thermiquement conducteur sont formées et assemblées de telle sorte qu'un jeu subsiste entre la ou chaque couche de matériau thermiquement conducteur et la face intérieure de la paroi de l'enceinte.

La figure 4h représente une structure de stockage 7 complète saturée en ammoniac dans une enceinte 8 close en fonctionnement.

### 5) Structure de stockage présentant un jeu

Lors d'une étape de remplissage ou de saturation en ammoniac de la structure de stockage, la ou chaque couche de stockage se gonfle et son volume augmente. Un tel phénomène est représenté notamment figure 4h.

La ou chaque une couche de matériau thermiquement conducteur peut être réalisée de sorte à être déformable élastiquement. Elle peut ainsi être par exemple être formée de graphite naturel expansé pré-compressé.

Ainsi, lors du remplissage en ammoniac, la ou chaque couche de stockage augmente en volume et l'au moins une couche en un matériau thermiquement conducteur subit des efforts qui la déforme.

La structure et l'enceinte peuvent en particulier être dimensionnées pour que cette déformation n'implique pas de changement significatif de la densité de la ou chaque couche en un matériau thermiquement conducteur, tant qu'un espace libre dans l'enceinte permet un changement de forme à densité constante.

Lorsqu'il existe un jeu entre la paroi intérieure de l'enceinte et la ou chaque couche en un matériau thermiquement conducteur, cette dernière peut ainsi se déformer pour occuper un volume périphérique résultant du jeu.

La ou chaque couche de matériau thermiquement conducteur peut ainsi se déformer jusqu'à venir en contact avec la paroi intérieure de l'enceinte dans la zone de jeu, par exemple la paroi périphérique. Ceci permet en particulier de garantir une circulation satisfaisante de la chaleur apportée par le dispositif de chauffage vers la ou chaque couche en matériau thermiquement conducteur.

Dans un mode de réalisation particulier, l'épaisseur de la ou chaque couche en un matériau thermiquement conducteur peut diminuer et son diamètre augmenter sans changement de densité, c'est-à-dire sans changement du volume total occupé par la couche.

La structure peut être dimensionnée de sorte que, lorsque tout le volume de l'intérieur de l'enceinte est occupé par la structure de stockage, c'est-à-dire lorsque plus aucun volume libre de l'enceinte n'est accessible à aucune couche d'un matériau thermiquement conducteur, la ou chaque couche de stockage n'est pas encore saturée en ammoniac. La poursuite du remplissage de la ou chaque couche de stockage implique une augmentation de volume supplémentaire de la ou chaque couche de stockage. Cette augmentation de volume est alors au moins partiellement compensée et/ou les efforts résultants au moins partiellement absorbés par une compression de la ou chaque de matériau thermiquement conducteur, dont la densité augmente alors.

Par exemple, le graphite naturel expansé à l'état naturel présente une densité environ cent fois plus faible que du graphite non expansé non poreux. Si l'au moins une couche en un matériau thermiquement conducteur est formé de graphite naturel expansé précompressé, par exemple sous forme d'une galette rigide, la ou chaque couche de matériau thermiquement conducteur pourra présenter une densité encore dix fois supérieure au graphite non expansé non poreux. Sa capacité théorique de compression est donc d'un facteur dix.

Ainsi, la structure de stockage peut être réalisée de telle sorte que les différentes couches sont maintenues en contact mutuel même lorsque la structure n'est pas saturée, voire est presque vide d'ammoniac. Il en résulte une meilleure conductivité thermique. Par ailleurs le fait que les éléments de la structure soient maintenus évite qu'ils ne se déplacent et ne s'usent de manière anticipée par frottements ou chocs mécaniques.

Une telle structure de stockage présente l'avantage de limiter néanmoins les efforts subis par l'enceinte à l'intérieur de laquelle la structure de stockage est disposée. En effet, les efforts résultants de l'augmentation du volume de la ou chaque couche de stockage sont absorbés par la ou chaque une couche de matériau thermiquement conducteur, qui change de forme à densité constante tant qu'un espace de jeu peut être occupé, puis qui est comprimée, avec une augmentation de densité, dès que tout espace de jeu accessible est occupé.

Selon un exemple de mode de réalisation, les couches de la structure de stockage peuvent être formées d'un empilement de disques, ou galettes, alternés. L'enceinte peut être de forme générale cylindrique ou conique ou présentant une section quelconque, par exemple carrée ou ovale. L'enceinte peut présenter une forme générale percée de part en part selon un axe donné. Dans le cas d'une enceinte conique ou d'une forme à section variable, les galettes présentent des diamètres de dimensions variables.

Dans un tel exemple de structure présentant un empilement de disques, la structure peut présenter une alternance d'au moins un disque formant couche de stockage et d'au moins un disque formant couche d'un matériau thermiquement conducteur. Les disques peuvent être prévus de telle sorte que l'épaisseur de la couche de stockage à vide soit au moins deux fois plus grande que l'épaisseur d'une couche de matériau thermiquement conducteur adjacente à vide.

De plus les disques peuvent être prévus de sorte que le jeu entre le bord de la couche de matériau thermiquement conducteur et la face intérieure de la paroi de l'enceinte qui contient la structure de stockage, c'est-à-dire l'espace de part et d'autre de la couche, soit compris entre 2% et 30%, plus préférentiellement entre par exemple 5% et 16%, du diamètre transversal de la couche (ou longueur principale équivalente en cas de structure de contour particulier) lorsque la structure de stockage est vide d'ammoniac.

Dans de tels intervalles, il est ainsi possible d'obtenir un véritable effet de limitation des efforts grâce à un jeu substantiel, la couche de matériau thermiquement conducteur conservant sa capacité à maintenir les couches de la structure de stockage en contact mutuel.

### 6) Exemple de procédé d'obtention d'une structure de stockage présentant un jeu

Selon une première étape, des couches de matériau thermiquement conducteur sont préparées. Une étape préalable de compression à des dimensions données, en particulier à une épaisseur donnée et/ou à une section donnée, peut permettre de fournir de telles couches à une densité souhaitée.

Selon une deuxième étape, des couches de matériau de stockage sont préparées. Ces couches peuvent être préparées par compression d'une poudre comprenant un sel pulvérulent tel que décrite précédemment. Cette compression peut être réalisée de sorte à obtenir des couches de dimensions données, en particulier avec une épaisseur donnée et/ou une section donnée.

Selon une troisième étape, les couches de matériau de stockage et les couches de matériau thermiquement conducteur sont placées dans l'enceinte de sorte à former la structure de stockage sous la forme d'un empilement présentant une alternance de ces couches. Alternativement, les couches ou des groupes de couches peuvent être empilées en alternance à l'extérieur de l'enceinte, les couches adhérant les unes aux autres pour former un ou plusieurs ensembles solidaires autoportants. Ce ou ces ensembles sont alors placés à l'intérieur de l'enceinte.

En référence à la figure 5, il est décrit une partie d'une structure de stockage dans laquelle chaque couche de matériau thermiquement conducteur 52 est dimensionnée par rapport à l'enceinte pour présenter un jeu 53 entre ladite couche et la paroi 54 de l'enceinte lorsque la structure n'est pas saturée en ammoniac, de sorte qu'une augmentation du volume d'une couche de stockage 51 adjacente lors d'un remplissage d'ammoniac est compensée dans une phase initiale de remplissage par une modification de la forme de la couche de matériau thermiquement conducteur 52 pour occuper un espace libre résultant du jeu. Ensuite, la couche de matériau thermiquement conducteur peut le cas échéant se comprimer pour absorber la suite de l'augmentation de volume. La couche de matériau thermiquement conducteur, en contact intime à la fois avec la paroi de l'enceinte et avec la couche de matériau de stockage, assure un excellent transfert thermique.

Bien entendu, la présente invention n'est nullement limitée aux formes de réalisation décrites et représentées, et l'homme du métier saura y apporter avec ses connaissances générales de nombreuses variantes et modifications.

## Revendications

1. Structure de stockage d'ammoniac (7), comprenant une alternance :
d'au moins une couche de stockage (71, 73) d'ammoniac, et
d'au moins une couche d'un matériau thermiquement conducteur (72) de conductivité thermique supérieure à celle de la couche de stockage (71, 73), la ou chaque couche de matériau thermiquement conducteur (72) étant destinée à augmenter les transferts thermiques au sein de la structure,
**caractérisée en ce que** chaque couche assure une séparation mutuelle totale entre les deux couches qui l'avoisinent.

2. Structure selon la revendication 1, **caractérisée en ce que** la ou chaque couche de matériau thermiquement conducteur (72) est constituée d'une poudre préalablement compressée.

3. Système de stockage et de déstockage d'ammoniac d'un véhicule comprenant une enceinte de stockage (8), **caractérisé en ce que** l'enceinte de stockage (8) comprend une structure de stockage (7) selon l'une des revendications 1 ou 2.

4. Système de stockage selon la revendication 3, **caractérisé en ce que** la ou chaque couche de matériau thermiquement conducteur est dimensionnée par rapport à l'enceinte pour présenter un jeu entre ladite couche et la paroi de l'enceinte lorsque la structure n'est pas saturée en ammoniac, de sorte qu'une augmentation du volume de l'au moins une couche de stockage par stockage d'ammoniac est compensée dans une phase initiale de remplissage par une modification de la forme de la couche de matériau thermiquement conducteur pour occuper un espace libre résultant du jeu.

5. Système de stockage selon la revendication 4, **caractérisé en ce que** le jeu est situé entre une paroi latérale de l'enceinte et une paroi latérale de la couche de matériau thermiquement conducteur.

6. Système de stockage selon la revendication 5, **caractérisé en ce que** le jeu est compris entre 2% et 30% du diamètre transversal de la couche de matériau thermiquement conducteur.

7. Système de stockage selon l'une des revendications 3 à 6, **caractérisé en ce que** la structure de stockage est réalisée de sorte que la ou chaque couche de matériau thermiquement conducteur est apte à se comprimer dans une phase finale de remplissage.

8. Système de stockage selon l'une des revendications 3 à 7, **caractérisé en ce que** les couches de la structure (7) présentent une symétrie de révolution de même axe, et **en ce que** la structure (7) présente un évidement le long de l'axe de symétrie de révolution pour permettre le stockage et/ou le déstockage d'ammoniac au niveau de chaque couche de stockage (71, 73).

9. Système de stockage selon l'une quelconque des revendications 3 à 8, **caractérisé en ce qu'**il comprend un dispositif de chauffage (9) de la structure de stockage pour le déstockage de l'ammoniac stocké dans la structure (7), le dispositif de chauffage (9) comprenant plusieurs modules chauffants, chaque module chauffant étant adapté pour chauffer une couche de stockage (71, 73) indépendamment d'autres couches de stockage.

10. Système de réduction catalytique sélective pour gaz d'échappement de moteur à combustion interne, **caractérisé en ce qu'**il comprend un système de stockage d'ammoniac selon l'une des revendications 3 à 9 et un module d'injection de l'ammoniac dans les gaz d'échappement.

11. Procédé d'obtention d'une structure de stockage d'ammoniac selon l'une des revendications 1 ou 2, le procédé comprenant des étapes consistant à :
déposer une couche de stockage comprenant un sel (71) non compressé ou préalablement compressé,
déposer une couche d'un matériau thermiquement conducteur (72) présentant une conductivité thermique plus élevée que celle de la couche de stockage (71), constitué d'une poudre préalablement compressée,
ces deux étapes étant répétées pour former une structure comprenant une alternance de couches de stockage et de couche(s) de matériau thermiquement conducteur intercalaire(s).

12. Procédé selon la revendication 11, dans lequel les étapes de dépôt sont réalisées dans une enceinte de stockage (8).

13. Procédé selon la revendication 12, dans lequel la première couche de sel est pulvérulente, le procédé comprenant l'introduction du sel pulvérulent dans l'enceinte pour former un couche et une mise en forme de cette couche par un plongeur.

14. Procédé selon la revendication 12, dans lequel la couche de stockage et la couche d'un matériau thermiquement conducteur sont pré-assemblées, les deux couches étant ensuite déposées simultanément dans l'enceinte.

15. Procédé selon la revendication 14, dans lequel le pré-assemblage est réalisé par collage et/ou compression des couches l'une contre l'autre.

## Patentansprüche

1. Struktur zur Lagerung von Ammoniak (7), die eine Abwechslung umfasst:
zumindest eine Ammoniaklagerschicht (71, 73), und
zumindest eine Schicht aus einem wärmeleitenden Material (72) mit höherer Wärmeleitfähigkeit als diejenige der Lagerschicht (71, 73), wobei die oder jede Schicht aus wärmeleitendem Material (72) dazu bestimmt ist, die Wärmeübergänge innerhalb der Struktur zu erhöhen,
**dadurch gekennzeichnet, dass** jede Schicht eine vollständige gegenseitige Trennung zwischen den beiden benachbarten Schichten gewährleistet.

2. Struktur nach Anspruch 1, **dadurch gekennzeichnet, dass** die oder jede Schicht aus wärmeleitendem Material (72) aus einem zuvor verdichteten Pulver besteht.

3. System zur Lagerung und Entnahme von Ammoniak eines Fahrzeugs mit einem Speichergehäuse (8), **dadurch gekennzeichnet, dass** das Speichergehäuse (8) eine Lagerstruktur (7) nach einem der Ansprüche 1 oder 2 aufweist.

4. Lagersystem nach Anspruch 3, **dadurch gekennzeichnet, dass** die oder jede Schicht aus wärmeleitendem Material relativ zum Gehäuse so dimensioniert ist, dass sie ein Spiel zwischen der Schicht und der Gehäusewand hat, wenn die Struktur nicht mit Ammoniak gesättigt ist, so dass eine Volumenzunahme der mindestens einen Lagerschicht durch Ammoniaklagerung in einer Anfangsphase der Befüllung durch eine Änderung der Form der Schicht aus wärmeleitendem Material kompensiert wird, um einen aus dem Spiel resultierenden Freiraum einzunehmen.

5. Lagersystem nach Anspruch 4, **dadurch gekennzeichnet, dass** sich das Spiel zwischen einer Seitenwand des Gehäuses und einer Seitenwand der wärmeleitenden Materialschicht befindet.

6. Lagersystem nach Anspruch 5, **dadurch gekennzeichnet, dass** das Spiel zwischen 2 % und 30 % des Querdurchmessers der wärmeleitenden Materialschicht beträgt.

7. Lagersystem nach einem der Ansprüche 3 bis 6, **dadurch gekennzeichnet, dass** die Lagerstruktur so aufgebaut ist, dass die oder jede Schicht aus wärmeleitendem Material in einer Endphase der Befüllung zur Verdichtung geeignet ist.

8. Lagersystem nach einem der Ansprüche 3 bis 7, **dadurch gekennzeichnet, dass** die Schichten der Struktur (7) eine Rotationssymmetrie der gleichen Achse aufweisen, und dass die Struktur (7) entlang der Rotationssymmetrieachse eine Ausnehmung aufweist, um die Lagerung und/oder die Entnahme von Ammoniak an jeder Lagerschicht (71, 73) zu ermöglichen.

9. Lagersystem nach einem der Ansprüche 3 bis 8, **dadurch gekennzeichnet, dass** es eine Heizvorrichtung (9) der Lagerstruktur zur Entnahme von in der Struktur (7) gelagertem Ammoniak umfasst, wobei die Heizvorrichtung (9) mehrere Heizmodule umfasst, wobei jedes Heizmodul geeignet ist, eine Lagerschicht (71, 73) unabhängig von anderen Lagerschichten zu erhitzen.

10. Selektives katalytisches Reduktionssystem für Abgase von Verbrennungsmotoren, **dadurch gekennzeichnet, dass** es ein Ammoniaklagersystem nach einem der Ansprüche 3 bis 9 und ein Modul zum Einspritzen von Ammoniak in die Abgase umfasst.

11. Verfahren zur Herstellung einer Ammoniak-Lagerstruktur nach einem der Ansprüche 1 oder 2, wobei das Verfahren die folgenden Schritte umfasst:
Ablagerung einer Lagerschicht umfassend ein unverdichtetes oder vorher verdichtetes Salz (71),
Ablagerung einer Schicht aus einem wärmeleitenden Material (72) mit einer höheren Wärmeleitfähigkeit als diejenige der Lagerschicht (71), bestehend aus einem zuvor verdichteten Pulver,
wobei diese beiden Schritte wiederholt werden, um eine Struktur aufzubauen, die aus einem Wechsel von (einer) Lagerschicht(en) und (einer) wärmeleitenden Zwischenschicht(en) besteht.

12. Verfahren nach Anspruch 11, wobei die Ablagerungsschritte in einem Speichergehäuse (8) durchgeführt werden.

13. Verfahren nach Anspruch 12, wobei die erste Salzschicht pulverförmig ist, wobei das Verfahren das Einbringen des pulverförmigen Salzes in das Gehäuse zur Bildung einer Schicht und das Formen dieser Schicht durch einen Taucher umfasst.

14. Verfahren nach Anspruch 12, wobei die Lagerschicht und die Schicht aus einem wärmeleitenden Material vormontiert werden, wobei die beiden Schichten dann gleichzeitig im Gehäuse abgelagert werden.

15. Verfahren nach Anspruch 14, wobei die Vormontage durch Kleben und/oder Verdichten der Schichten aneinander erfolgt.

## Claims

1. An ammonia storage structure (7), comprising in alternation:
at least one ammonia storage layer (71, 73), and
at least one layer of a thermally conductive material (72) with a greater thermal conductivity than that of the storage layer (71, 73), the or each layer of thermally conductive material (72) being designed to increase heat transfer within the structure,
**characterized in that** each layer provides total mutual separation between the two layers adjoining it.

2. The structure according to claim 1, **characterized in that** the or each layer of thermally conductive material (72) consists of a previously compressed powder.

3. A system for storing and discharging ammonia for a vehicle, including a storage container (8), **characterized in that** the storage container (8) includes a storage structure (7) according to one of claims 1 or 2.

4. The storage system according to claim 3, **characterized in that** the or each layer of thermally conductive material is dimensioned with respect to the container so as to exhibit clearance between said layer and the wall of the container when the structure is not saturated with ammonia, so that an increase in the volume of the at least one storage layer due to ammonia storage is compensated, in an initial filling phase, by a change in the shape of the layer of thermally conductive material so as to occupy free space resulting from the clearance.

5. The storage system according to claim 4, **characterized in that** the clearance is situated between a sidewall of the container and a sidewall of the layer of thermally conductive material.

6. The storage system according to claim 5, **characterized in that** the clearance is comprised between 2% and 30% of the transverse diameter of the layer of thermally conductive material.

7. The storage system according to one of claims 3 to 6, **characterized in that** the storage structure is produced in such a way that the or each layer of thermally conductive material is capable of compressing in a final filling phase.

8. The storage system according to one of claims 3 to 7, **characterized in that** the layers of the structure (7) have axial symmetry with the same axis, and **in that** the structure (7) has a hollow along the axis of axial symmetry to allow storage and/or withdrawal of ammonia at each storage layer (71, 73).

9. The storage system according to any one of claims 3 to 8, **characterized in that** it includes a storage structure heating device (9) for withdrawing ammonia stored in the structure (7), the heating device (9) including several heating modules, each heating module being designed to heat one storage layer (71, 73) independently of other storage layers.

10. A selective catalytic reduction system for internal combustion engine exhaust gases, **characterized in that** it includes an ammonia storage system according to one of claims 3 to 9 and a module for injecting ammonia into the exhaust gases.

11. A method for obtaining an ammonia storage structure according to one of claims 1 or 2, the method including steps consisting of:
depositing a storage layer including a non-compressed or previously compressed salt (71),
depositing a layer of a thermally conductive material (72) having a higher thermal conductivity than that of the storage layer (71), consisting of a previously compressed powder,
these two steps being repeated to form a structure including an alternation of storage layers and of intercalary layer(s) of thermally conductive material.

12. The method according to claim 11, wherein the deposition steps are accomplished within a storage container (8).

13. The method according to claim 12, wherein the first layer of salt is powdered, the method including introduction of the powdered salt into the container to form one layer and shaping this layer using a plunger.

14. The method according to claim 12, wherein the storage layer and the layer of a thermally conductive material are pre-assembled, the two layers then being deposited simultaneously into the container.

15. The method according to claim 14, wherein the pre-assembly is accomplished by gluing and/or compression of the layers against one another.
